# EUROPÄISCHE PATENTSCHRIFT

(11) **EP 1 228 561 B1**
(45) Veröffentlichungstag und Bekanntmachung des Hinweises auf die Patenterteilung: **07.07.2004**
(21) Anmeldenummer: 00967520.8
(22) Anmeldetag: 12.08.2000
(51) Int. Cl.: H02K 5/173, H02K 9/22, H02K 9/06

(54) **HANDWERKZEUGMASCHINE**
MANUALLY-OPERATED MACHINE TOOL
MACHINE-OUTIL MANUELLE

(30) Priorität: 15.10.1999 DE 19949755
(43) Veröffentlichungstag der Anmeldung: 07.08.2002
(73) Patentinhaber: ROBERT BOSCH GMBH, 70442 Stuttgart (DE)
(72) Erfinder: FRAUHAMMER, Karl, 70771 Leinfelden-Echterdingen (DE); HELLBACH, Manfred, 70771 Leinfelden-Echterdingen (DE); MUELLER, Frank, 75392 Deckenpfronn (DE); SCHNERRING, Heinz, 72135 Dettenhausen (DE)
(86) Internationale Anmeldenummer: PCT/DE2000/002732
(87) Internationale Veröffentlichungsnummer: WO 2001/029954

(56) Entgegenhaltungen:
- US-A- 3 717 779
- US-A- 3 831 048
- US-A- 4 487 270
- PATENT ABSTRACTS OF JAPAN vol. 007, no. 247 (E-208), 2. November 1983 (1983-11-02) & JP 58 136249 A (TOKYO SHIBAURA DENKI KK), 13. August 1983 (1983-08-13)

## Beschreibung

### Stand der Technik

Die Erfindung geht aus von einer Handwerkzeugmaschine nach dem Oberbegriff des Anspruchs 1.

Bekannte Handwerkzeugmaschinen besitzen in der Regel einen in einem Gehäuse angeordneten Motor, meist Elektromotor, der mit seiner Antriebswelle mit einem Einsatzwerkzeug über ein Getriebe und/oder über ein Mitnahmeelement in Wirkverbindung bringbar ist. Die Antriebswelle weist meist ein dem Einsatzwerkzeug zugewandtes Lager und ein dem Einsatzwerkzeug abgewandtes Lager auf.

Um die auf den Motor, insbesondere auf den Kommutator eines Elektromotors, wirkenden Schwingungen und insbesondere Stöße während des Betriebs zu reduzieren und dadurch die Lebensdauer des Motors zu erhöhen, ist bekannt, das dem Einsatzwerkzeug abgewandte Lager in radialer Richtung über einen schwingungsdämpfenden Kunststoff in seiner Lagerstelle abzustützen.

Aus der US 4 487 270 A ist eine gattungsbildende Handwerkzeugmaschine bekannt, und zwar eine handgeführte Bohrmaschine mit einem Elektromotor, dessen Antriebswelle auf einer einer Ausgangswelle abgewandten Seite ein Kugellager aufweist, das in radialer Richtung und axial in Richtung Ausgangswelle über einen Gummiring abgestützt ist.

Auf einer der Ausgangswelle abgewandten Seite des Kugellagers ist ein Drucksensor angeordnet, über den eine sich aus einem übertragenen Drehmoment ergebende Axialkraft erfaßbar ist.

### Vorteile der Erfindung

Die Erfindung geht aus von einer Handwerkzeugmaschine mit einem in einem Gehäuse angeordneten Motor, der mit einer gelagerten Antriebswelle mit einem Einsatzwerkzeug in Wirkverbindung bringbar ist, wobei zumindest ein Lager der Antriebswelle wenigstens in radialer Richtung über ein schwingungsdämpfendes Kunststoffteil in einer Lagerstelle abgestützt ist.

Es wird vorgeschlagen, daß das Lager in axialer Richtung über zumindest eine Kontaktfläche mit wenigstens einem zum Gehäuse ortsfesten, separaten metallischen Bauteil verbunden ist und daß das schwingungsdämpfende Kunstoffteil durch das metallische Bauteil im montierten Zustand verspannt ist. Es kann trotz der Abstützung des Lagers über ein Kunststoffteil, beispielsweise über ein vorteilhaft leichtes Kunststoffgehäuse, eine gute Wärmeabfuhr durch Wärmeleitung über das metallische Bauteil erreicht werden. Mit einem kostengünstigen Lager und einem kostengünstigen Schmierstoff kann eine lange Lebensdauer erzielt werden. Ein überhitztes Lager und eine Beschädigung von angrenzenden Bauteilen ist sicher vermeidbar.

Ferner kann besonders vorteilhaft das Lager über ein schwingungsdämpfendes Kunststoffteil in einer Lagerstelle abgestützt werden und bei einer guten Wärmeabfuhr gleichzeitig eine gute Schwingungsdämpfung und dadurch ein guter Schutz für den Motor, insbesondere für einen Elektromotor, erreicht werden.

Die Lagerstelle für das Lager kann von verschiedenen Bauteilen gebildet sein, wie insbesondere von einem separaten Motorgehäuse oder vom Gehäuse der Handwerkzeugmaschine. Um Gewicht und Kosten einzusparen, sind Motorgehäuse sowie das Gehäuse der Handwerkzeugmaschine häufig aus Kunststoff hergestellt. Ist die Lagerstelle von einem Kunststoffteil gebildet, ist es besonders von Vorteil, die Wärme erfindungsgemäß über ein separates metallisches Bauteil aus dem Lagerbereich abzuführen. Es kann jedoch auch sinnvoll sein, bei einer von einem Metallteil gebildeten Lagerstelle die Wärme gezielt über das separate metallische Bauteil abzuführen, und zwar insbesondere, wenn das Lager zusätzlich zur radialen Richtung in einer axialen Richtung über das schwingungsdämpfende Kunststoffteil in der Lagerstelle abgestützt ist.

Grundsätzlich kann ein dem Einsatzwerkzeug zugewandtes Lager und/oder ein dem Einsatzwerkzeug abgewandtes Lager über ein schwingungsdämpfendes Kunststoffteil in seiner Lagerstelle abgestützt und durch ein erfindungsgemäßes metallisches Bauteil gekühlt sein. Um eine exakte Kopplung der Antriebswelle mit einem Getriebe oder mit einem Mitnahmeelement mit geringen Toleranzen zu ermöglichen, ist jedoch vorteilhaft das dem Einsatzwerkzeug zugewandte Lager direkt in einem Metallgehäuseteil abgestützt und die Schwingungen werden vorzugsweise an dem dem Einsatzwerkzeug abgewandten Lager gedämpft.

Bei schnellaufenden Motoren, bei denen insbesondere hohe Lagertemperaturen auftreten können, wie beispielsweise bei Bohrhämmer, Meißelhämmer usw., ist die Antriebswelle vorzugsweise in Wälzlagern mit einem Innenring und einem Außenring gelagert, wobei das metallische Bauteil vorteilhaft direkt mit einer Kontaktfläche auf dem Außenring aufliegt, der in der Regel zum Gehäuse ortsfest angeordnet ist.

in einer weiteren erfindungsgemäßen Ausgestaltung wird vorgeschlagen, daß das Lager zumindest vor der Montage des metallischen Bauteils in axialer Richtung zur zukünftigen Montagestelle des metallischen Bauteils über seine radiale Lagerstelle hinausragt. In die Lagerstelle greifende Vorsprünge am metallischen Bauteil können vermieden und es kann eine besonders einfache und kostengünstige Konstruktion erreicht werden.

Ferner wird vorteilhaft das schwingungsdämpfende Kunststoffteil durch das metallische Bauteil bei der Montage verspannt und dadurch sicher in der Lagerstelle fixiert, und zwar vorzugsweise indem vor der Montage des metallischen Bauteils das schwingungsdämpfende Kunststoffteil sich in axialer Richtung geringfügig über die Kontaktfläche des Lagers und/oder über die Lagerstelle des Lagers erstreckt. Abhängig von einer gewünschten Spannkraft im Kunststoffteil und einem Elastizitätsmodul des Kunststoffteils reichen in der Regel einige zehntel mm aus, mit denen sich das Kunststoffteil über die Kontaktfläche und/oder über die Lagerstelle erstreckt.

Um axiales Spiel zwischen dem Lager und dem metallischen Bauteil sicher zu vermeiden und um stets eine große Kontaktfläche und einen guten Wärmeübergang zu erreichen, ist vorteilhaft das Lager durch die Montage des metallischen Bauteils in axialer Richtung gegen einen dabei zumindest elastisch verformten Bund des schwingungsdämpfenden Kunststoffteils verschoben.

Das metallische Bauteil liegt vorzugsweise auf einer vom Motor abgewandten Stirnseite des Lagers auf, wodurch dieses einfach montiert und demontiert und insbesondere besonders vorteilhaft in einem Kühlluftstrom angeordnet werden kann. Durch den Kühlluftstrom kann die Wärme aus dem metallischen Bauteil über Konvektion vorteilhaft abgeführt und ein großer Wärmestrom vom Lager zum metallischen Bauteil durch ein hohes Temperaturgefälle erreicht werden.

In einer Ausgestaltung wird vorgeschlagen, daß das metallische Bauteil von einem Blechteil gebildet ist, wodurch dieses mit einer großen Oberfläche und besonders leicht und kostengünstig ausgeführt werden kann. Grundsätzlich sind jedoch auch andere Bauteile denkbar, wie beispielsweise Spritzgußteile usw. Als Material kann ein kostengünstiges Stahlblech oder es können für einen großen Wärmestrom Materialien mit einer besonders hohen Wärmeleitfähigkeit verwendet werden, wie beispielsweise Kupfer, Aluminium, Messing usw.

Ferner dichtet vorteilhaft das metallische Bauteil die Lagerstelle zumindest zu einer Seite wenigsten staubdicht ab. Das Lager kann vor äußeren Einflüssen, wie insbesondere vor Schmutz, Staub und/oder Wasser geschützt, die Lebensdauer kann gesteigert und zusätzliche Bauteile, Gewicht und Bauraum können vermieden werden. Schließt das metallische Bauteil das Lager nach außen weitgehend dicht ab, kann es zudem vorteilhaft dazu genutzt werden, ein Depot für einen Schmierstoff des Lagers einzuschließen.

Eine vorteilhafte, platzsparende und leichte Konstruktion kann mit einem topfförmigen metallischen Bauteil erreicht werden, wobei der topfförmige Bereich zur Aufnahme einer Befestigung des Lagers und als Depot genutzt werden kann.

Die erfindungsgemäße Lösung kann bei verschiedenen, dem Fachmann als sinnvoll erscheinenden Handwerkzeugmaschinen eingesetzt werden und besonders vorteilhaft bei Handwerkzeugmaschinen mit schnellaufenden Elektromotoren, wie Bohrhämmer, Meißelhämmer usw.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt einer erfindungsgemäßen Handwerkzeugmaschine,
- Fig. 2: einen vergrößerten Ausschnitt II in Fig. 1 vor einer Montage eines Stahlblechteils und
- Fig. 3: einen Ausschnitt eines Schnitts entlang der Linie III-III in Fig. 1.

### Beschreibung des Ausführungsbeispiels

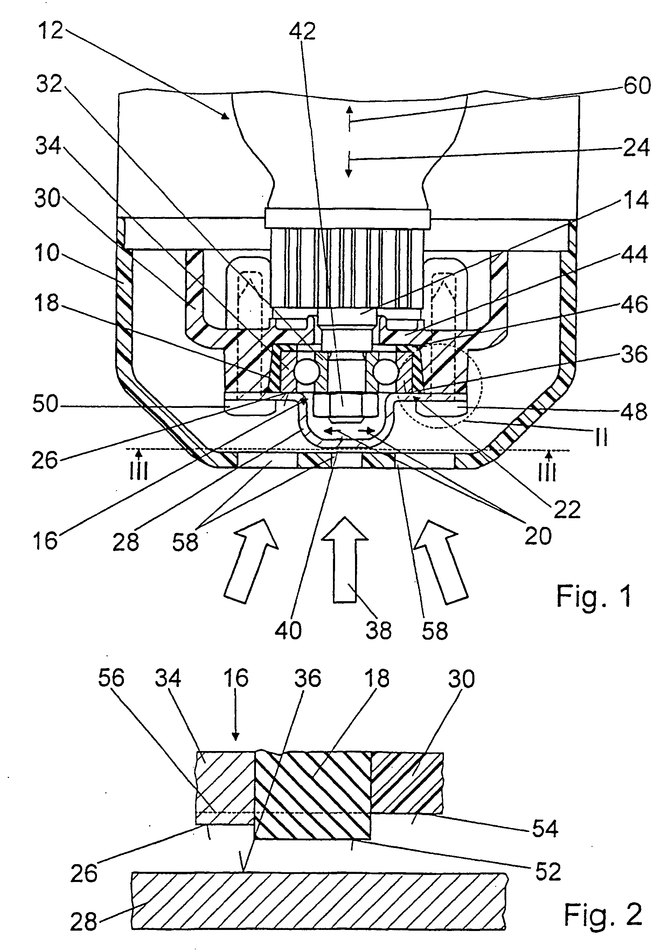

Fig. 1 zeigt einen Ausschnitt eines Bohrhammers mit einem in einem Gehäuse 10 angeordneten Elektromotor 12, der mit einer Antriebswelle 14 mit einem nicht näher dargestellten Einsatzwerkzeug in Wirkverbindung bringbar ist. Die Antriebswelle 14 ist auf der dem Einsatzwerkzeug zugewandten, nicht näher dargestellten Seite in einem ersten Lager gelagert, das direkt in einem Metallgehäuse abgestützt ist. Ferner ist die Antriebswelle 14 auf der dem Einsatzwerkzeug abgewandten Seite in einem Lager 16 gelagert, das in radialer Richtung 20 über eine schwingungsdämpfende Elastomerbuchse 18 in einer Lagerstelle 22 abgestützt ist. Die Lagerstelle 22 wird von einem separaten Kunststoffmotorgehäuse 30 gebildet, das im Gehäuse 10 des Bohrhammers befestigt ist.

Das Lager 16 wird von einem Kugellager mit einem auf der Antriebswelle 14 über eine Befestigungsmutter 42 befestigten Innenring 32 und mit einem zum Gehäuse 10 ortsfesten Außenring 34 gebildet. Erfindungsgemäß liegt auf einer vom Elektromotor 12 abgewandten axialen Kontaktfläche 26 des Außenrings 34 ein topfförmiges Stahlblechteil 28 mit einer Kontaktfläche 36 auf.

Bei der Montage wird die Elastomerbuchse 18, die einen sich in Montagerichtung 60 verjüngenden Außenkonus aufweist, in die entsprechend konisch ausgebildete Lagerstelle 22 im Motorgehäuse 30 eingeschoben, und zwar bis die Elastomerbuchse 18 mit seiner in Montagerichtung 60 weisenden axialen Stirnseite an einem Bund 44 des Motorgehäuses 30 anschlägt. Anschließend wird das Lager 16 in die Elastomerbuchse 18 eingeführt, und zwar bis sich das Lager 16 mit einer in Montagerichtung 60 weisenden axialen Stirnseite seines Außenrings 34 über einen sich radial nach innen erstreckenden Bund 46 der Elastomerbuchse 18 am Bund 44 des Motorgehäuses 30 abstützt. Vor der Montage des Stahlblechteils 28 ragt das Lager 16 in axialer Richtung 24 zur zukünftigen Montagestelle des Stahlblechteils 28 über seine radiale Lagerstelle 22 hinaus. Ferner erstreckt sich vor der Montage des Stahlblechteils 28 die Elastomerbuchse 18 in axialer Richtung 24 um wenige zehntel mm über die Kontaktfläche 26 des Lagers 16 (Fig. 2).

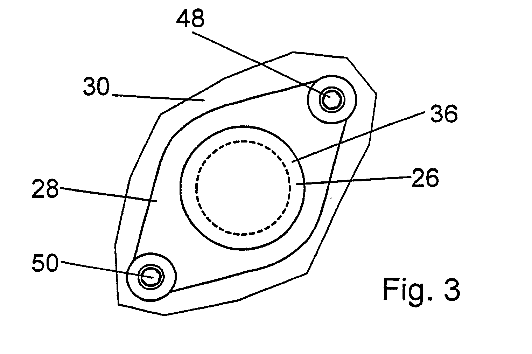

Das Stahlblechteil 28 wird über zwei Schrauben 48, 50 mit seiner Kontaktfläche 36 in Montagerichtung 60 gegen eine Stirnseite 52 der Elastomerbuchse 18 und gegen die Kontaktfläche 26 des Außenrings 34 des Lagers 16 gepreßt, und zwar bis die Stirnseite 52 der Elastomerbuchse 18 und die Kontaktfläche 26 des Lagers 16 im wesentlichen in einer von einer Stirnseite 54 des Motorgehäuses 30 aufgespannten Ebene 56 liegen (Fig. 1, 2 und 3). Dabei wird die Elastomerbuchse 18 elastisch verformt bzw. verspannt und mit ihrem Außenkonus im Innenkonus der Lagerstelle 22 zentriert. Das Lager 16 ist nach der Montage des Stahlblechteils 28 in axialer Richtung 60 gegen den dabei elastisch verformten Bund 46 der Elastomerbuchse 18 verschoben, wodurch ein axiales Spiel zwischen den Kontaktflächen 26, 36 des Stahlblechteils 28 und des Lagers 16 sicher vermieden und ein guter Wärmeübergang sichergestellt wird.

Das Stahlblechteil 28 ist in einem Kühlluftstrom 38 eines nicht näher dargestellten Motorlüfters angeordnet, der auf der dem Einsatzwerkzeug abgewandten Seite über Lüftungsöffnungen 58 im Gehäuse 10 Frischluft ansaugt.

Das Stahlblechteil 28 verschließt die Lagerstelle 22 zu der dem Elektromotor 12 abgewandten Seite staubdicht. Ferner ist in dem topfförmigen Bereich des Stahlblechteils 28, in den die Antriebswelle 14 mit der Befestigungsmutter 42 ragt, ein Fettdepot 40 für das Lager 16 angeordnet.

### Bezugszeichen

- 10: Gehäuse
- 12: Motor
- 14: Antriebswelle
- 16: Lager
- 18: Kunststoffteil
- 20: Richtung
- 22: Lagerstelle
- 24: Richtung
- 26: Kontaktfläche
- 28: Bauteil
- 30: Kunststoffteil
- 32: Innenring
- 34: Außenring
- 36: Kontaktfläche
- 38: Kühlluftstrom
- 40: Depot
- 42: Befestigungsmutter
- 44: Bund
- 46: Bund
- 48: Schraube
- 50: Schraube
- 52: Stirnseite
- 54: Stirnseite
- 56: Ebene
- 58: Lüftungsöffnungen
- 60: Montagerichtung

## Patentansprüche

1. Handwerkzeugmaschine mit einem in einem Gehäuse (10) angeordneten Motor (12), der mit einer gelagerten Antriebswelle (14) mit einem Einsatzwerkzeug in Wirkverbindung bringbar ist, wobei zumindest ein Lager (16) der Antriebswelle (14) wenigstens in radialer Richtung (20) über ein schwingungsdämpfendes Kunststoffteil (18) in einer Lagerstelle (22) abgestützt ist, **dadurch gekennzeichnet, daß** das Lager (16) in axialer Richtung (24) über zumindest eine Kontaktfläche (26) mit wenigstens einem zum Gehäuse (10) ortsfesten, separaten metallischen Bauteil (28) verbunden ist und daß das schwingungsdämpfende Kunststoffteil (18) durch das metallische Bauteil (28) im montierten Zustand verspannt ist.

2. Handwerkzeugmaschine nach Anspruch 1, **dadurch gekennzeichnet, daß** das schwingungsgedämpfte Lager (16) auf der dem Einsatzwerkzeug abgewandten Seite angeordnet ist.

3. Handwerkzeugmaschine nach einem der vorhergehenden Ansprüche, **dadurch gekennzeichnet, daß** das Lager (16) von einem Wälzlager mit einem Innenring (32) und einem Außenring (34) gebildet ist und das metallische Bauteil (28) mit einer Kontaktfläche (36) auf dem Außenring (34) aufliegt.

4. Handwerkzeugmaschine nach einem der vorhergehenden Ansprüche, **dadurch gekennzeichnet, daß** das Lager (16) zumindest vor der Montage des metallischen Bauteils (28) in axialer Richtung (24) zur zukünftigen Montagestelle des metallischen Bauteils (28) über seine radiale Lagerstelle (22) hinausragt.

5. Handwerkzeugmaschine nach einem der vorhergehenden Ansprüche, **dadurch gekennzeichnet, daß** vor der Montage des metallischen Bauteils (28) das schwingungsdämpfende Kunststoffteil (18) sich in axialer Richtung (24) geringfügig über die Kontaktfläche (26) und/oder über die Lagerstelle (22) des Lagers (16) erstreckt.

6. Handwerkzeugmaschine nach einem der vorhergehenden Ansprüche, **dadurch gekennzeichnet, daß** das Lager (16) durch die Montage des metallischen Bauteils (28) in axialer Richtung (60) gegen einen dabei zumindest elastisch verformten Bund (46) des schwingungsdämpfenden Kunststoffteils (18) verschoben ist.

7. Handwerkzeugmaschine nach einem der vorhergehenden Ansprüche, **dadurch gekennzeichnet, daß** das metallische Bauteil (28) auf einer vom Motor (12) abgewandten Stirnseite des Lagers (16) aufliegt.

8. Handwerkzeugmaschine nach einem der vorhergehenden Ansprüche, **dadurch gekennzeichnet, daß** das metallische Bauteil (28) in einem Kühlluftstrom (38) angeordnet ist.

9. Handwerkzeugmaschine nach einem der vorhergehenden Ansprüche, **dadurch gekennzeichnet, daß** das metallische Bauteil (28) von einem Blechteil gebildet ist.

10. Handwerkzeugmaschine nach einem der vorhergehenden Ansprüchen, **dadurch gekennzeichnet, daß** das metallische Bauteil (28) die Lagerstelle (22) des Lagers (16) zumindest zu einer Seite wenigsten staubdicht verschließt.

11. Handwerkzeugmaschine nach Anspruch 10, **dadurch gekennzeichnet, daß** das metallische Bauteil (28) ein Depot (40) für einen Schmierstoff des Lagers (16) aufweist.

## Claims

1. Powered hand tool having a motor (12) which is arranged in a housing (10) and can be brought into operative connection with an inserted tool by means of a mounted drive shaft (14), at least one bearing (16) of the drive shaft (14) being supported in a bearing seat (22) at least in the radial direction (20) via a vibration-damping plastic part (18), **characterized in that** the bearing (16) is connected in the axial direction (24), via at least one contact surface (26), to at least one separate metallic component (28) which is fixed relative to the housing (10), and **in that** the vibration-damping plastic part (18) is restrained in the fitted state by the metallic component (28).

2. Powered hand tool according to Claim 1, **characterized in that** the vibration-damping bearing (16) is arranged on the side remote from the inserted tool.

3. Powered hand tool according to one of the preceding claims, **characterized in that** the bearing (16) is formed by a rolling-contact bearing having an inner ring (32) and an outer ring (34), and the metallic component (28) rests with a contact surface (36) on the outer ring (34).

4. Powered hand tool according to one of the preceding claims, **characterized in that** the bearing (16), at least before the fitting of the metallic component (28), projects beyond its radial bearing seat (22) in the axial direction (24) relative to the future fitted location of the metallic component (28).

5. Powered hand tool according to one of the preceding claims, **characterized in that**, before the fitting of the metallic component (28), the vibration-damping plastic part (18) extends in the axial direction (24) slightly beyond the contact surface (26) and/or beyond the bearing seat (22) of the bearing (16).

6. Powered hand tool according to one of the preceding claims, **characterized in that** the bearing (16) is displaced in the axial direction (60) against a collar (46) of the vibration-damping plastic part (18) by the fitting of the metallic component (28), the collar (46) being at least elastically deformed in the process.

7. Powered hand tool according to one of the preceding claims, **characterized in that** the metallic component (28) rests on an end face, remote from the motor (12), of the bearing (16).

8. Powered hand tool according to one of the preceding claims, **characterized in that** the metallic component (28) is arranged in a cooling-air flow (38).

9. Powered hand tool according to one of the preceding claims, **characterized in that** the metallic component (28) is formed by a sheet-metal part.

10. Powered hand tool according to one of the preceding claims, **characterized in that** the metallic component (28) closes the bearing seat (22) of the bearing (16) at least in a dust-tight manner at least on one side.

11. Powered hand tool according to Claim 10, **characterized in that** the metallic part (28) has a repository (40) for a lubricant of the bearing (16).

## Revendications

1. Outil portatif motorisé, comprenant un moteur (12) disposé dans un carter (10), qui peut être mis en liaison effective avec un arbre d'entraînement (14) monté rotatif et portant un outil interchangeable, au moins un palier (16) de l'arbre d'entraînement (14) étant supporté au moins dans la direction radiale (20), dans une zone d'appui (22), par l'intermédiaire d'une pièce en matière plastique (18) qui isole des vibrations,
**caractérisé en ce que**
dans la direction axiale (24), le palier (16) est assemblé à au moins un élément métallique séparé (28) fixe en position par rapport au carter (10) par l'intermédiaire d'au moins une surface de contact (26), et dans l'état monté, la pièce en matière plastique (18) qui isole des vibrations est serrée par l'élément métallique (28).

2. Outil portatif selon la revendication 1,
**caractérisé en ce que**
le palier (16) amorti en vibration est disposé sur le côté qui est éloigné de l'outil interchangeable.

3. Outil portatif selon une des revendications précédentes,
**caractérisé en ce que**
le palier (16) est formé d'un roulement comprenant une bague intérieure (32) et une bague extérieure (34), et l'élément métallique (28) possédant une surface de contact (36) est appuyé sur la bague extérieure (34).

4. Outil portatif selon une des revendications précédentes,
**caractérisée en ce que**
du moins avant le montage de l'élément métallique (18), le palier (16) fait saillie vers l'extérieur dans la direction axiale (24) au-delà de sa zone d'appui (22) vers la future zone de montage de l'élément métallique (28).

5. Outil portatif selon une des revendications précédentes,
**caractérisée en ce que**
avant le montage de l'élément métallique (28), la pièce en matière plastique (18) qui isole des vibrations se prolonge légèrement dans la direction axiale (24) au-delà de la surface de contact (26) et/ou au-delà de la zone d'appui (22) du palier (16).

6. Outil portatif selon une des revendications précédentes,
**caractérisé en ce que**
sous l'effet du montage de l'élément métallique (28), le palier (16) est repoussé dans la direction axiale (60) contre une embase (46) de la pièce en matière plastique (18) qui isole des vibrations, embase qui est alors déformée au moins élastiquement.

7. Outil portatif selon une des revendications précédentes,
**caractérisé en ce que**
l'élément métallique (28) est appuyé sur un côté frontal du palier (16) éloigné du moteur (12).

8. Outil portatif selon une des revendications précédentes,
**caractérisé en ce que**
l'élément métallique (28) est placé dans un courant d'air de refroidissement (38).

9. Outil portatif selon une des revendications précédentes,
**caractérisé en ce que**
l'élément métallique (28) est formé d'une pièce de tôle.

10. Outil portatif selon une des revendications précédentes,
**caractérisé en ce que**
l'élément métallique (28) ferme la zone d'appui (22) du palier (16) au moins de façon étanche à la poussière, au moins sur un côté.

11. Outil portatif selon la revendication 10,
**caractérisé en ce que**
l'élément métallique (28) présente un réservoir (40) pour un lubrifiant du palier (16).
